# EUROPÄISCHE PATENTSCHRIFT

(11) **EP 1 913 334 B1**
(45) Veröffentlichungstag und Bekanntmachung des Hinweises auf die Patenterteilung: **29.03.2017**
(21) Anmeldenummer: 06777323.4
(22) Anmeldetag: 14.06.2006
(51) Int. Cl.: G01C 19/56, G01C 25/00

(54) **VERFAHREN UND SCHALTUNGSANORDNUNG ZUR SICHEREN INBETRIEBNAHME EINES DREHRATENSENSORS**
METHOD AND CIRCUIT ARRANGEMENT FOR SECURE START-UP OF A RATE-OF-TURN SENSOR
PROCEDE ET CIRCUIT POUR MISE EN SERVICE FIABLE D'UN CAPTEUR DE VITESSE DE ROTATION

(30) Priorität: 26.07.2005 DE 102005034702
(43) Veröffentlichungstag der Anmeldung: 23.04.2008
(73) Patentinhaber: ROBERT BOSCH GMBH, 70442 Stuttgart (DE)
(72) Erfinder: STEINLECHNER, Siegbert, 71229 Leonberg (DE)
(86) Internationale Anmeldenummer: PCT/EP2006/063188
(87) Internationale Veröffentlichungsnummer: WO 2007/012521

(56) Entgegenhaltungen:
- EP-A- 1 437 569
- WO-A-2004/092745
- DE-A1- 10 240 087
- PATENT ABSTRACTS OF JAPAN Bd. 1997, Nr. 06, 30. Juni 1997 (1997-06-30) & JP 09 049736 A (TOMIKAWA YOSHIRO), 18. Februar 1997 (1997-02-18)

## Beschreibung

### Technisches Gebiet:

Die Erfindung betrifft ein Verfahren zur Inbetriebnahme eines Drehratensensors gemäß dem Oberbegriff des Anspruchs 1, sowie eine Schaltungsanordnung zur Durchführung des Verfahrens, gemäß Anspruch 11.

### Stand der Technik:

Mikromechanische Drehratensensoren werden beispielsweise in Kraftfahrzeugen für die Funktion des Elektronischen Stabilitätsprogramms, ESP, oder für den Wankneigungsausgleich eingesetzt. Sie messen mit Hilfe des Corioliseffekts beispielsweise die Drehrate um die Hochachse des Fahrzeugs oder um dessen Längsachse.

Im Folgenden wird nur der in solchen Drehratensensoren auftretende Antriebskreis ohne den Messkreis zur Bestimmung der Coriolis-Beschleunigung betrachtet.

In mikromechanischen Drehratensensoren befinden sich ein oder mehrere, jeweils ein elastisch aufgehängtes Schwingerelement umfassende mechanische Schwinger, die mit Hilfe zeitlich periodischer, elektrostatisch aufgebrachter Antriebskräfte zu einer periodischen Schwingungsbewegung angeregt werden können.

Aus der DE 102 40 087 A1 ist eine Schaltungsanordnung zur Inbetriebnahme eines mindestens ein zu einer mechanischen Schwingungsbewegung anregbaren Schwingerelement umfassenden Drehratensensors bekannt, bei der eine Betriebsregelung mit Mitteln zur Erzeugung eines Antriebsignals zum Antrieb des zu der Schwingungsbewegung anregbaren Schwingerelements des Drehratensensors an Hand eines der momentanen Geschwindigkeit oder Auslenkung des Schwingerelements proportionalen Signals erfolgt. Ferner ist hieraus eine Schaltungsanordnung zur Bestimmung der Hauptresonanzfrequenz der Schwingungsbewegung des Schwingerelements während des Einschaltvorgangs des Drehratensensors zu entnehmen und es sind Mittel zur Übergabe der Hauptresonanzfrequenz an die Betriebsregelung nach Beendigung des Einschaltvorgangs vorhanden.

In der EP 1 437 569 A1 ist beschrieben, dass ein in Dünnschichttechnik hergestellter mikromechanischer Resonator mit Elektroden und Piezolagen aufgebaut ist, wobei auch hier das Problem besteht, dass ein unbeabsichtigter Wechsel von einer Resonanzfrequenz auf eine weitere Resonanzfrequenz durch eine äußere mechanische Schockeinwirkung erfolgen kann.

Ferner ist aus der WO 2004/092745 A1 ein mikromechanischer Resonator bekannt, bei dem ein Schwingungskörper elastisch aufgehängt ist und Mittel zur Einstellung einer Resonanzfrequenz vorhanden sind. Hier wird vorgeschlagen, mittels einer Spannungsdifferenz zwischen dem Schwingungskörper und einer stationären Elektrode eine irreversible Korrektur von dauerhaften Resonanzfrequenzabweichungen vorzunehmen.

Die eingangs beschriebenen Drehratensensoren sind weiterhin beispielsweise aus DE 102 37 410 A1 und aus DE 102 37 411 A1 bekannt.

Drehratensensoren werden auf einer mechanischen Resonanzfrequenz des Schwingerelements betrieben. Dazu muss die Anregungsfrequenz eines die Antriebskräfte erzeugenden Antriebssignals F(t) geeignet gewählt werden. Bei Resonanzfrequenz herrscht zwischen der Geschwindigkeit des Schwingerelements und der Anregungsfrequenz des Antriebsignals F(t) keine Phasenverschiebung, zwischen der Auslenkung des Schwingerelements und der Anregungsfrequenz des Antriebsignals F(t) beträgt sie -π/2. Der Verlauf des die Antriebskräfte erzeugenden Antriebsignals F(t) ist idealerweise sinusförmig. Der Begriff sinusförmig schließt einen cosinusförmigen Verlauf, entsprechend einem um π/2 verschobenen sinusförmigen Verlauf mit ein. In der Praxis wird jedoch meist ein leichter zu erzeugendes rechteckförmiges Antriebsignal F(t) verwendet.

Durch an dem Schwingerelement angeordnete kapazitive Sensoren kann die momentane Auslenkung oder die momentane Geschwindigkeit des Schwingerelements gemessen, und ein der momentanen Auslenkung proportionales Signal x(t) oder ein der momentanen Geschwindigkeit proportionales Signal v(t) ausgegeben werden. Wird das der Geschwindigkeit proportionale Signal v(t) geeignet verstärkt, kann das resultierende Signal direkt oder nach einer Rechteckformung wieder als Antriebssignal F(t) zur Erzeugung der Antriebskraft verwendet werden. Wird statt der Geschwindigkeit die Auslenkung gemessen, so muss zunächst die Phasenverschiebung von -π/2 beispielsweise über einen zusätzlichen Phasenschieber kompensiert werden, bevor die Rückkopplung auf das Antriebsignal F(t) erfolgt.

In beiden Fällen beginnt der mechanische Schwinger bei ausreichender Verstärkung auf einer Resonanzfrequenz zu schwingen. Damit die Schwingungsamplitude nicht zu groß wird und um Beschädigungen am Schwingerelement zu vermeiden, muss die Schwingungsamplitude gemessen und durch Veränderung der Amplitude A_{F} des Antriebsignals F(t) auf einen vorgegebenen Wert geregelt werden.

Da ein mechanischer Schwinger außer seiner mechanischen Hauptresonanzfrequenz noch weitere höherfrequente Nebenresonanzfrequenzen besitzen kann, kann es vorkommen, dass die oben beschriebene Anordnung nicht auf der Haupt-, sondern auf einer Nebenresonanzfrequenz schwingt. Dies stellt ein ernstes Problem dar, da dann die Funktion des Drehratensensors nicht verfügbar ist.

Insbesondere bei einem rechteckförmigen Antriebssignal F(t) kann dieser Effekt auftreten. Da x(t) oder v(t) sinusförmige Signale sind, werden diese in der Regel einem Komparator zugeführt, der die Signale mit Null vergleicht und ein rechteckförmiges Ausgangssignal F(t) ausgibt. Die Verstärkung eines solchen Komparators erreicht bei kleinen Eingangssignalen x(t) oder v(t) sehr hohe Werte bis zu einer Größenordnung von über 10⁵. Dadurch können auch sehr schwache Nebenresonanzen der Schwingungsbewegung des Schwingerelements zu unerwünschten stabilen Schwingungen angeregt werden.

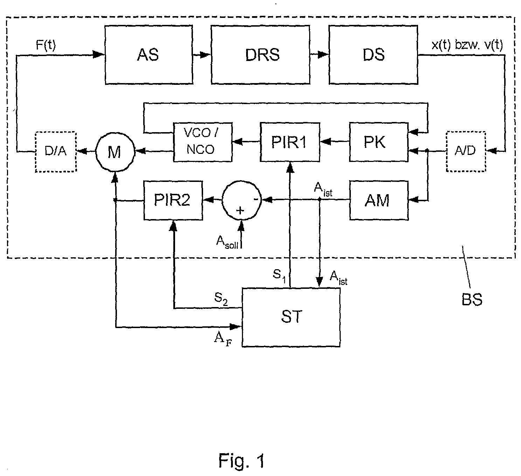

Teilweise werden in der Praxis auch Verfahren eingesetzt, bei denen auf eine direkte Kopplung der Signale x(t) oder v(t) auf das Antriebssignal F(t) verzichtet wird. Solche Systeme arbeiten ähnlich wie ein phase locked loop, PLL. Ein Beispiel einer derartigen Anordnung ist in Fig. 1 gestrichelt umrahmt dargestellt. Auch hier kann das System bei ungeschickter Dimensionierung und/oder einer fehlenden Überwachung auf eine Nebenresonanz einrasten.

### Offenbarung der Erfindung und deren Vorteile:

Die Nachteile des Standes der Technik werden bei einem erfindungsgemäßen Verfahren der eingangs genannten Gattung vermieden, indem während des Einschaltvorgangs derart auf die Betriebsregelung des Drehratensensors Einfluss genommen wird, dass diese unterdrückt und die Amplitude des Antriebssignals auf einen konstanten, für den Drehratensensor unschädlichen voreinstellbaren Wert festgelegt wird, wobei die Anregungsfrequenz des Antriebsignals im Wesentlichen kontinuierlich von einem Startwert unterhalb der Hauptresonanzfrequenz der mechanischen Schwingungsbewegung bis zu einem Endwert oberhalb der Hauptresonanzfrequenz und unterhalb einer Nebenresonanzfrequenz angehoben wird, und gleichzeitig die Auslenkung und/oder die Geschwindigkeit der Schwingungsbewegung des Schwingerelements beobachtet wird, um während des Anhebens der Anregungsfrequenz die Hauptresonanzfrequenz der Schwingungsbewegung zu bestimmen, wobei nach dem Erreichen des Endwerts und der Bestimmung der Hauptresonanzfrequenz die Anregungsfrequenz des Antriebsignals auf die Hauptresonanzfrequenz gesetzt, und die Betriebsregelung der Amplitude und der Anregungsfrequenz des Antriebsignals zum normalen Betrieb des Drehratensensors freigegeben wird.

Das erfindungsgemäße Verfahren weist gegenüber dem Stand der Technik den Vorteil auf, dass das Einrasten des Drehratensensors auf einer Nebenresonanzfrequenz vermieden wird. Das erfindungsgemäße Verfahren stellt ein Einschwingen des Drehratensensors während des Einschaltvorgangs auf dessen Hauptresonanzfrequenz sicher.

Gemäß einer vorteilhaften Ausgestaltung erkennt das erfindungsgemäße Verfahren sowie die zugehörige Schaltungsanordnung ein Verlassen der Hauptresonanzfrequenz und leitet darauf hin einen erneuten Einrastvorgang der Anregungsfrequenz auf die Hauptresonanzfrequenz ein. Somit wird ein sicherer Betrieb des Drehratensensors auch bei Vorliegen von äußeren elektrischen oder mechanischen Störungen ermöglicht. Dadurch gewährleistet die Erfindung, dass ein Drehratensensor nach einer elektrischen oder mechanischen Störung wieder sicher auf seiner Hauptresonanzfrequenz einrastet.

Dabei wird der Einschaltvorgang erneut gestartet, wenn die Amplitude des Antriebsignals einen vorgegebenen Maximalwert überschreitet. Dies ist genau dann der Fall, wenn die Anregungsfrequenz des Antriebsignals sich von der Hauptresonanzfrequenz der Schwingungsbewegung des Schwingerelements entfernt hat, da dann ein für die Regelung der Amplitude des Antriebsignals zuständiger Amplitudenregler die aus dem Verlassen der Hauptresonanzfrequenz resultierende zu geringe Amplitude der Auslenkung oder der Geschwindigkeit des Schwingerelements durch eine steigende Amplitude des Antriebsignals zu kompensieren versucht.

Alternativ kann anstelle der Amplitude des Antriebsignals auch direkt die Anregungsfrequenz des Antriebsignals überwacht werden. Ein erneutes Einleiten des Einschaltvorgangs kann beispielsweise erfolgen, wenn die Antriebsfrequenz die durch die Start- und den Endwerte der Anhebung der Anregungsfrequenz während des Einschaltvorgangs vorgegebenen Grenzen um einen voreinstellbaren Wert unter- oder überschreitet.

Ebenso ist denkbar, dass die beim Einschaltvorgang des Drehratensensors bestimmte Hauptresonanzfrequenz zwischengespeichert wird, beispielsweise um bei einem Abweichen der Anregungsfrequenz um einen voreinstellbaren Wert von der zwischengespeicherten Hauptresonanzfrequenz den Einschaltvorgang erneut zu starten, oder um bei einem Verlassen der Hauptresonanzfrequenz die Anregungsfrequenz ohne erneuten Einschaltvorgang auf die beim ersten Einschaltvorgang bestimmte Hauptresonanzfrequenz zu setzen.

Gemäß einer vorteilhaften Ausgestaltung der Erfindung wird der Einschaltvorgang erneut gestartet, wenn die Amplitude des Antriebsignals einen voreinstellbaren Maximalwert länger als über einen voreinstellbaren Zeitraum hinweg überschreitet, oder die Anregungsfrequenz des Antriebsignals über einen voreinstellbaren Zeitraum hinweg von der zwischengespeicherten Hauptresonanzfrequenz abweicht, oder sich länger als für einen voreinstellbaren Zeitraum den durch die Start- und die Endwerte der Anhebung der Antriebsfrequenz während des Einschaltvorgangs vorgegebenen Grenzen bis auf einen voreinstellbaren Wert nähert.

Vorzugsweise wird die Versorgungsspannung des Drehratensensors kontinuierlich überwacht, wobei der Einschaltvorgang erneut gestartet wird, wenn die Versorgungsspannung unter einen bestimmten, voreinstellbaren Wert fällt.

Grundsätzlich ist denkbar, dass das der Schwingungsbewegung proportionale Signal nicht direkt verstärkt, sondern zur Erzeugung eines in Amplitude und Anregungsfrequenz regelbaren Antriebssignals verwendet wird, wobei beim Einschalten auf die Anregungsfrequenz und auf die Verstärkung der Amplitude des Antriebssignals Einfluss genommen wird.

Darüber hinaus ist eine Kombination einer Überwachung der Amplitude und der Anregungsfrequenz des Antriebsignals denkbar.

### Wege zur Ausführung der Erfindung:

Eine erfindungsgemäße Schaltungsanordnung zur sicheren Inbetriebnahme eines Drehratensensors DRS ist in Figur 1 dargestellt. Eine gestrichelt umrahmte Betriebsschaltung BS dient dem Antrieb des mindestens ein zu einer Schwingungsbewegung anregbares Schwingerelement umfassenden Drehratensensors DRS mittels eines periodischen Antriebsignals F(t).

Das Antriebsignal F(t) für das Schwingerelement des Drehratensensors DRS wird von einer Antriebsschaltung AS in eine dem Antriebsignal F(t) proportionale Antriebskraft gewandelt. Die Auslenkung oder die Geschwindigkeit der Schwingungsbewegung des Schwingerelements wird von einer Detektionsschaltung DS erfasst und in der Auslenkung oder der Geschwindigkeit proportionale elektrische Signale x(t), v(t) umgewandelt. Die Detektionsschaltung DS umfasst beispielsweise kapazitive Sensoren. Der Rest der Betriebsschaltung BS kann entweder analog oder vorzugsweise digital realisiert werden. Bei einer digitalen Ausführung sind zur Signalwandlung gestrichelt dargestellte Analog-Digital-Wandler A/D und Digital-Analog-Wandler D/A notwendig.

Ein analoger voltage controlled oscillator, VCO, oder ein digitaler numerical controlled oscillator, NCO, erzeugt eine Sinusschwingung, die über einen zur Amplitudenregelung dienenden Multiplizierer M das Schwingerelement des Drehratensensors DRS antreibt. Das Ausgangssignal x(t) oder v(t) der Detektionsschaltung DS wird in einem Phasenkomparator PK mit einem Soll-Phasensignal aus dem VCO/NCO verglichen. Dies erfolgt in der Weise, dass das Ausgangssignal des Phasenkomparators PK Null ergibt, wenn das Schwingerelement des Drehratensensors DRS in Resonanz schwingt. Bei Resonanzfrequenz herrscht zwischen dem der Geschwindigkeit der Schwingungsbewegung proportionalen Signal v(t) und dem Antriebsignal F(t) keine Phasenverschiebung, zwischen dem der Auslenkung der Schwingungsbewegung proportionalen Signal x(t) und dem Antriebsignal F(t) beträgt die Phasenverschiebung -π/2.

Das Ausgangssignal des Phasenkomparators PK ist mit dem Eingang eines vorzugsweise als Proportional-Integral-Regler ausgeführten Reglers PIR1 verbunden. Der Reglerausgang beeinflusst die von VCO/NCO abgegebene Frequenz, die sich in der Folge so einstellt, dass der Ausgang des Phasenkomparators PK Null wird, also eine Resonanzfrequenz erreicht ist.

In einem parallelen Zweig wird die Amplitude Aᵢₛₜ von x(t) bzw. v(t) mittels eines Amplitudenmessers AM gemessen und mit einem Sollwert Aₛₒₗₗ verglichen. Auch hier sorgt ein vorzugsweise als Proportional-Integral-Regler ausgeführter Regler PIR2 durch Veränderung der Amplitude A_{F} des Antriebsignals F(t) dafür, dass Aᵢₛₜ = Aₛₒₗₗ eingehalten wird.

Beim Einschalten des Drehratensensors DRS übernimmt eine Steuerschaltung ST die Kontrolle über die abgegebene VCO/NCO-Frequenz und über die Amplitude des Antriebsignals F(t). Dazu werden vorzugsweise die Steuersignale S₁ und S₂ in die Integratoren der beiden Regler PIR1, PIR2 dominant eingeprägt. Eine Steuerung der Regler PIR1, PIR2 durch ihre regulären Eingänge wird unterdrückt.

Die Amplitude A_{F} des Antriebsignals F(t) wird mittels des Steuersignals S₂ auf einem konstanten, für den Drehratensensor DRS ungefährlichen Wert A_{Fc} eingestellt.

Gleichzeitig wird die der Anregungsfrequenz des Antriebsignals F(t) entsprechende Frequenz des VCO/NCO mittels des Steuersignals S₁ auf eine Startfrequenz f₁ eingestellt. Dann wird die Frequenz linear oder fein gestuft innerhalb eines vorgebbaren Zeitintervalls von beispielsweise einigen zehntel Sekunden kontinuierlich auf eine Endfrequenz f₂ angehoben. Dieser Vorgang kann als Frequenz-Scan bezeichnet werden. Dabei wird der Ausgang des Amplitudenmessers AM mittels der Steuerschaltung ST überwacht. Die Steuerschaltung ST speichert den der Resonanzfrequenz entsprechenden Wert des Steuersignals S₁, bei dem bei konstanter Amplitude A_{Fc} des Antriebsignals das Maximum der Amplitude Aᵢₛₜ des der Geschwindigkeit oder der Auslenkung des Schwingerelements proportionalen Signals v(t), x(t) beobachtet wurde. Nach Beendigung des Frequenz-Scans wird der gespeicherte Wert des Steuersignals S₁ in den vor dem VCO/NCO angeordneten Regler PIR1 übertragen, und die Kontrolle wieder an die beiden Regler PIR1 und PIR2 und damit an die Betriebsschaltung BS zurückgegeben. Dadurch ist die Anregungsfrequenz schon sehr nahe an der tatsächlichen Resonanzfrequenz des Schwingerelements des Drehratensensors DRS, wobei die Frequenz- und Amplitudenregelungen zu arbeiten beginnen und kurze Zeit später sicher eingeschwungen sind.

Die Start- und Endfrequenzen f₁ und f₂ des Frequenz-Scans sind so zu legen, dass die Hauptresonanzfrequenz der Schwingungsbewegung des Schwingerelements sicher zwischen diesen beiden Werten liegt, und dass keine Nebenresonanz zwischen der Start- f₁ und Endfrequenz f₂ liegt.

Im normalen Betrieb überwacht die Steuerschaltung ST die Amplitude A_{F} des Antriebsignals F(t). Kommt der Drehratensensor DRS aufgrund einer Störung außer Tritt und wird außerhalb seiner Hauptresonanzfrequenz betrieben, so wird der Amplitudenregler PIR2 versuchen, den Abfall der Amplitude Aᵢₛₜ durch einen steigenden Wert von A_{F} zu kompensieren. Durch den I-Anteil im Regler PIR2 wird die Amplitude A_{F} immer weiter steigen, bis eine natürliche oder vorgegebene Begrenzung eintritt. Wenn die Amplitude A_{F} über einen vorgebbaren Zeitraum von beispielsweise einer Sekunde dauernd über einem gewählten Maximalwert A_{Fmax} liegt, wird von der Steuerschaltung ST das erneute Setzen von Amplitude und Frequenz, wie beim Einschaltvorgang beschrieben, erzwungen, worauf der Drehratensensor DRS wieder in einen normalen Betriebszustand gebracht wird.

### Gewerbliche Anwendbarkeit:

Die Erfindung ist insbesondere im Bereich der Herstellung und des Betriebs von Drehratensensoren, sowie von Betriebschaltungen für derartige Sensoren gewerblich anwendbar. Die Erfindung eignet sich für die kostengünstige Realisierung von zukünftigen Drehratensensoren für ESP, Wankneigungsausgleich und Navigation.

## Patentansprüche

1. Verfahren zur Inbetriebnahme eines mindestens ein zu einer mechanischen Schwingungsbewegung anregbares Schwingerelement umfassenden Drehratensensors (DRS), wobei zur Betriebsregelung des Drehratensensors ein der momentanen Geschwindigkeit oder Auslenkung des Schwingerelements proportionales Signal (v(t), x(t)) verstärkt, und als Antriebsignal (F(t)) zum Antrieb des Schwingerelements verwendet wird, **dadurch gekennzeichnet,**
**dass** während des Einschaltvorgangs des Drehratensensors (DRS) die Amplitude (A_{F}) des Antriebssignals (F(t)) auf einen konstanten, voreinstellbaren Wert (A_{Fc}) festgelegt wird, wobei die Anregungsfrequenz des Antriebsignals (F(t)) im Wesentlichen kontinuierlich von einem Startwert (f₁) unterhalb der Hauptresonanzfrequenz der Schwingungsbewegung bis zu einem Endwert (f₂) oberhalb der Hauptresonanzfrequenz und unterhalb einer Nebenresonanzfrequenz angehoben wird, und gleichzeitig die Auslenkung (x(t)) und/oder die Geschwindigkeit (v(t)) des Schwingerelements beobachtet wird, um die Hauptresonanzfrequenz der Schwingungsbewegung zu bestimmen, wobei nach dem Erreichen des Endwerts (f₂) und der Bestimmung der Hauptresonanzfrequenz die Anregungsfrequenz des Antriebsignals (F(t)) auf die Hauptresonanzfrequenz gesetzt, und die Betriebsregelung der Amplitude (A_{F}) und der Anregungsfrequenz des Antriebsignals (F(t)) freigegeben wird.

2. Verfahren nach Anspruch 1, **dadurch gekennzeichnet,**
**dass** der Einschaltvorgang erneut gestartet wird, wenn die Amplitude (A_{F}) des Antriebsignals (F(t)) einen voreinstellbaren Maximalwert (A_{Fmax}) überschreitet.

3. Verfahren nach Anspruch 2, **dadurch gekennzeichnet,**
**dass** der Einschaltvorgang erneut gestartet wird, wenn die Amplitude (A_{F}) des Antriebsignals (F(t)) über einen vorgebbaren Zeitraum den voreinstellbaren Maximalwert (A_{Fmax}) überschreitet.

4. Verfahren nach Anspruch 1, 2 oder 3, **dadurch gekennzeichnet,**
**dass** die beim Einschaltvorgang des Drehratensensors (DRS) bestimmte Hauptresonanzfrequenz zwischengespeichert wird.

5. Verfahren nach Anspruch 1, **dadurch gekennzeichnet,**
**dass** der Einschaltvorgang erneut gestartet wird, wenn die Antriebsfrequenz die durch die Start- (f₁) und den Endwerte (f₂) vorgegebenen Grenzen um einen voreinstellbaren Wert unter- oder überschreitet.

6. Verfahren nach Anspruch 5, **dadurch gekennzeichnet,**
**dass** die beim Einschaltvorgang des Drehratensensors (DRS) bestimmte Hauptresonanzfrequenz zwischengespeichert wird.

7. Verfahren nach Anspruch 6, **dadurch gekennzeichnet,**
**dass** der Einschaltvorgang bei einem Abweichen der Anregungsfrequenz um einen voreinstellbaren Wert von der zwischengespeicherten Hauptresonanzfrequenz erneut gestartet wird.

8. Verfahren nach einem der Ansprüche 5, 6 oder 7, **dadurch gekennzeichnet, dass** der Einschaltvorgang erneut gestartet wird, wenn die Anregungsfrequenz des Antriebsignals (F(t)) über einen voreinstellbaren Zeitraum hinweg von der zwischengespeicherten Hauptresonanzfrequenz abweicht, oder sich länger als für einen voreinstellbaren Zeitraum den durch die Start- (f₁) und die Endwerte (f₂) vorgegebenen Grenzen bis auf einen voreinstellbaren Wert nähert.

9. Verfahren nach einem der vorhergehenden Ansprüche, **dadurch gekennzeichnet,**
**dass** die Versorgungsspannung des Drehratensensors (DRS) überwacht, und der Einschaltvorgang erneut gestartet wird, wenn die Versorgungsspannung des Drehratensensors (DRS) unter einen bestimmten, voreinstellbaren Wert fällt.

10. Verfahren nach einem der vorhergehenden Ansprüche, **dadurch gekennzeichnet, dass** das der Geschwindigkeit oder Auslenkung proportionale Signal (v(t), x(t)) nicht direkt verstärkt, sondern zur Erzeugung eines in Amplitude (A_{F}) und Anregungsfrequenz regelbaren Antriebssignals (F(t)) verwendet wird.

11. Schaltungsanordnung zur Durchführung des Verfahrens nach einem der Ansprüche 1 bis 10, umfassend eine Betriebsregelung (BS) mit Mitteln (VCO/NCO, PIR1, PIR2, PK, AM, M) zur Erzeugung eines Antriebsignals (F(t)) zum Antrieb eines zu einer Schwingungsbewegung anregbaren Schwingerelements eines Drehratensensors (DRS) anhand eines der momentanen Geschwindigkeit oder Auslenkung des Schwingerelements proportionalen Signals (v(t), x(t)),
**gekennzeichnet durch**
Mittel zur Bestimmung der Hauptresonanzfrequenz der Schwingungsbewegung des Schwingerelements während des Einschaltvorgangs des Drehratensensors (DRS), sowie Mittel zur Übergabe der Hauptresonanzfrequenz an die Betriebsregelung (BS) nach Beendigung des Einschaltvorgangs, wobei die Mittel zur Bestimmung der Hauptresonanzfrequenz Mittel (ST, S₂) zur Erzeugung einer konstanten Amplitude (A_{F}) des Antriebsignals (F(t)), Mittel (ST, S₁) zum kontinuierlichen Anheben der Anregungsfrequenz des Antriebsignals (F(t)) von einem Startwert (f₁) unterhalb der Hauptresonanzfrequenz der Schwingungsbewegung auf einen Endwert (f₂) oberhalb der Hauptresonanzfrequenz und unterhalb einer Nebenresonanzfrequenz, Mittel zur gleichzeitigen Beobachtung der Auslenkung (x(t)) und/oder der Geschwindigkeit (v(t)) des Schwingerelements während des Anhebens der Anregungsfrequenz, sowie Mittel zur Bestimmung der Anregungsfrequenz, bei der die Auslenkung (x(t)) und/oder die Geschwindigkeit (v(t)) des Schwingerelements ein Maximum aufweisen, umfassen.

12. Schaltungsanordnung nach Anspruch 11, **gekennzeichnet durch**
Mittel zur Zwischenspeicherung der beim Einschaltvorgang bestimmten Hauptresonanzfrequenz.

13. Schaltungsanordnung nach einem der Ansprüche 11 oder 12, **gekennzeichnet durch**
Mittel zur Überwachung der Amplitude (A_{F}) des Antriebsignals (F(t)), Mittel zum Vergleich der Amplitude (A_{F}) des Antriebsignals (F(t)) mit einem Maximalwert (A_{Fmax}), sowie Mittel zum erneuten Einleiten des Einschaltvorgangs bei einem Überschreiten des Maximalwerts (A_{Fmax}) **durch** die Amplitude (A_{F}) des Antriebsignals (F(t)).

14. Schaltungsanordnung nach Anspruch 13, **gekennzeichnet durch**
Mittel zum erneuten Einleiten des Einschaltvorgangs, wenn die Amplitude (A_{F}) des Antriebsignals (F(t)) den Maximalwert (A_{Fmax}) über einen voreinstellbaren Zeitraum hinweg überschreitet.

15. Schaltungsanordnung nach Anspruch 11 oder 12, **gekennzeichnet durch** Mittel zur Überwachung der Anregungsfrequenz, Mittel zum Vergleich der Anregungsfrequenz mit der zwischengespeicherten Hauptresonanzfrequenz oder mit den Start- (f₁) und Endwerten (f₂), sowie Mittel zum erneuten Einleiten des Einschaltvorgangs bei einem Abweichen der Antriebsfrequenz um voreinstellbare Werte von einem oder mehreren dieser Frequenzen.

16. Schaltungsanordnung nach Anspruch 15, **gekennzeichnet durch** Mittel zum erneuten Einleiten des Einschaltvorgangs, wenn die Anregungsfrequenz des Antriebsignals (F(t)) über einen voreinstellbaren Zeitraum hinweg von der zwischengespeicherten Hauptresonanzfrequenz abweicht, oder sich länger als für einen voreinstellbaren Zeitraum den **durch** die Start- (f₁) und die Endwerte (f₂) vorgegebenen Grenzen bis auf einen voreinstellbaren Wert nähert.

17. Schaltungsanordnung nach einem der Ansprüche 11 bis 16, **gekennzeichnet durch**
Mittel zur Überwachung der Versorgungsspannung des Drehratensensors (DRS) sowie Mittel zum erneuten Einleiten des Einschaltvorgangs bei einem Abweichen der Versorgungsspannung von einem voreinstellbaren Wert.

## Claims

1. Method for activating a rate-of-rotation sensor (DRS) comprising at least one oscillator element which can be excited to perform a mechanical oscillation movement, wherein, in order to control the operation of the rate-of-rotation sensor, a signal (v(t), x(t)) proportional to the current speed or deflection of the oscillator element is amplified and is used as a drive signal (F(t)) for driving the oscillator element, **characterized**
**in that**, during the operation of switching on the rate-of-rotation sensor (DRS), the amplitude (A_{F}) of the drive signal (F(t)) is set to a constant presettable value (A_{Fc})), wherein the excitation frequency of the drive signal (F(t)) is increased substantially continuously from a starting value (f₁) below the main resonant frequency of the oscillation movement to a final value (f₂) above the main resonant frequency and below a secondary resonant frequency, and the deflection (x(t)) and/or the speed (v(t)) of the oscillator element is/are observed at the same time in order to determine the main resonant frequency of the oscillation movement, wherein, after the final value (f₂) has been reached and the main resonant frequency has been determined, the excitation frequency of the drive signal (F(t)) is set to the main resonant frequency, and the operational control of the amplitude (A_{F}) and of the excitation frequency of the drive signal (F(t)) is enabled.

2. Method according to Claim 1, **characterized**
**in that** the switching-on operation is started again if the amplitude (A_{F}) of the drive signal (F(t)) exceeds a presettable maximum value (A_{Fmax}).

3. Method according to Claim 2, **characterized**
**in that** the switching-on operation is started again if the amplitude (A_{F}) of the drive signal (F(t)) exceeds the presettable maximum value (A_{Fmax}) over a predefinable period.

4. Method according to Claim 1, 2 or 3, **characterized in that** the main resonant frequency determined during the operation of switching on the rate-of-rotation sensor (DRS) is buffered.

5. Method according to Claim 1, **characterized**
**in that** the switching-on operation is started again if the drive frequency falls below or exceeds the limits predefined by the starting (f₁) and final values (f₂) by a presettable value.

6. Method according to Claim 5, **characterized**
**in that** the main resonant frequency determined during the operation of switching on the rate-of-rotation sensor (DRS) is buffered.

7. Method according to Claim 6, **characterized in that** the switching-on operation is started again if the excitation frequency differs from the buffered main resonant frequency by a presettable value.

8. Method according to one of Claims 5, 6 and 7, **characterized**
**in that** the switching-on operation is started again if the excitation frequency of the drive signal (F(t)) differs from the buffered main resonant frequency over a presettable period or approaches the limits predefined by the starting (f₁) and final values (f₂), up to a presettable value, for longer than a presettable period.

9. Method according to one of the preceding claims, **characterized**
**in that** the supply voltage of the rate-of-rotation sensor (DRS) is monitored, and the switching-on operation is started again if the supply voltage of the rate-of-rotation sensor (DRS) falls below a particular presettable value.

10. Method according to one of the preceding claims, **characterized in that** the signal (v(t), x(t)) proportional to the speed or deflection is not directly amplified, but rather is used to generate a drive signal (F(t)), the amplitude (A_{F}) and excitation frequency of which can be controlled.

11. Circuit arrangement for carrying out the method according to one of Claims 1 to 10, comprising an operational control system (BS) having means (VCO/NCO, PIR1, PIR2, PK, AM, M) for generating a drive signal (F(t)) for driving an oscillator element of a rate-of-rotation sensor (DRS), which can be excited to perform an oscillation movement, on the basis of a signal
(v(t), x(t)) proportional to the current speed or deflection of the oscillator element,
**characterized by**
means for determining the main resonant frequency of the oscillation movement of the oscillator element during the operation of switching on the rate-of-rotation sensor (DRS) and means for transferring the main resonant frequency to the operational control system (BS) after the end of the switching-on operation, wherein the means for determining the main resonant frequency comprise means (ST, S₂) for generating a constant amplitude (A_{F}) of the drive signal (F(t)), means (ST, S₁) for continuously increasing the excitation frequency of the drive signal (F(t)) from a starting value (f₁) below the main resonant frequency of the oscillation movement to a final value (f₂) above the main resonant frequency and below a secondary resonant frequency, means for simultaneously observing the deflection (x(t)) and/or the speed (v(t)) of the oscillator element while the excitation frequency is being increased, and means for determining the excitation frequency at which the deflection (x(t)) and/or the speed (v(t)) of the oscillator element is/are at a maximum.

12. Circuit arrangement according to Claim 11, **characterized by**
means for buffering the main resonant frequency determined during the switching-on operation.

13. Circuit arrangement according to either of Claims 11 and 12, **characterized by**
means for monitoring the amplitude (A_{F}) of the drive signal (F(t)), means for comparing the amplitude (A_{F}) of the drive signal (F(t)) with a maximum value (A_{Fmax}), and means for initiating the switching-on operation again if the maximum value (A_{Fmax}) is exceeded by the amplitude (A_{F}) of the drive signal (F(t)).

14. Circuit arrangement according to Claim 13, **characterized by**
means for initiating the switching-on operation again if the amplitude (A_{F}) of the drive signal (F(t)) exceeds the maximum value (A_{Fmax}) over a presettable period.

15. Circuit arrangement according to Claim 11 or 12, **characterized by**
means for monitoring the excitation frequency, means for comparing the excitation frequency with the buffered main resonant frequency or with the starting (f₁) and final values (f₂), and means for initiating the switching-on operation again if the drive frequency differs from one or more of these frequencies by presettable values.

16. Circuit arrangement according to Claim 15, **characterized by**
means for initiating the switching-on operation again if the excitation frequency of the drive signal (F(t)) differs from the buffered main resonant frequency over a presettable period or approaches the limits predefined by the starting (f₁) and final values (f₂), up to a presettable value, for longer than a presettable period.

17. Circuit arrangement according to one of Claims 11 to 16, **characterized by**
means for monitoring the supply voltage of the rate-of-rotation sensor (DRS) and means for initiating the switching-on operation again if the supply voltage differs from a presettable value.

## Revendications

1. Procédé de mise en service d'un capteur de vitesse de rotation (DRS) comprenant un élément oscillateur pouvant être excité en un mouvement oscillant mécanique, un signal (v(t), x(t)) proportionnel à la vitesse momentanée ou à l'excursion de l'élément oscillateur étant amplifié en vue de la régulation opérationnelle du capteur de vitesse de rotation et utilisé en tant que signal d'entraînement (F(t)) pour l'entraînement de l'élément oscillateur, **caractérisé en ce**
**que** pendant l'opération de mise sous tension du capteur de vitesse de rotation (DRS), l'amplitude (A_{F}) du signal d'entraînement (F(t)) est fixée à une valeur (A_{Fc}) constante pouvant être préréglée, la fréquence d'excitation du signal d'entraînement (F(t)) étant élevée pour l'essentiel continuellement à partir d'une valeur de départ (f₁) inférieure à la fréquence de résonance principale du mouvement oscillant jusqu'à une valeur finale (f₂) supérieure à la fréquence de résonance principale et inférieure à une fréquence de résonance secondaire, et l'excursion (x(t)) et/ou la vitesse (v(t)) de l'élément oscillateur sont surveillées en même temps afin de déterminer la fréquence de résonance principale du mouvement oscillant, la fréquence d'excitation du signal d'entraînement (F(t)) étant fixée à la fréquence de résonance principale et la régulation opérationnelle de l'amplitude (A_{F}) et de la fréquence d'excitation du signal d'entraînement (F(t)) étant libérée après avoir atteint la valeur finale (f₂) et déterminé la fréquence de résonance principale.

2. Procédé selon la revendication 1, **caractérisé en ce que** l'opération de mise sous tension est redémarrée lorsque l'amplitude (A_{F}) du signal d'entraînement (F(t)) dépasse une valeur maximale (A_{Fmax}) pouvant être préréglée.

3. Procédé selon la revendication 2, **caractérisé en ce que** l'opération de mise sous tension est redémarrée lorsque l'amplitude (A_{F}) du signal d'entraînement (F(t)) dépasse la valeur maximale (A_{Fmax}) pouvant être préréglée pendant une période pouvant être prédéfinie.

4. Procédé selon la revendication 1, 2 ou 3, **caractérisé en ce que** la fréquence de résonance principale définie lors de l'opération de mise sous tension du capteur de vitesse de rotation (DRS) est mémorisée temporairement.

5. Procédé selon la revendication 1, **caractérisé en ce que** l'opération de mise sous tension est redémarrée lorsque la fréquence d'entraînement devient inférieure ou supérieure d'une valeur pouvant être préréglée aux limites prédéfinies par les valeurs de départ (f₁) et finale (f₂).

6. Procédé selon la revendication 5, **caractérisé en ce que** la fréquence de résonance principale définie lors de l'opération de mise sous tension du capteur de vitesse de rotation (DRS) est mémorisée temporairement.

7. Procédé selon la revendication 6, **caractérisé en ce que** l'opération de mise sous tension est redémarrée en cas d'écart d'une valeur pouvant être préréglée entre la fréquence d'excitation et la fréquence de résonance principale mémorisée temporairement.

8. Procédé selon l'une des revendications 5, 6 ou 7, **caractérisé en ce que** l'opération de mise sous tension est redémarrée lorsque la fréquence d'excitation du signal d'entraînement (F(t)) s'écarte pendant plus d'une période pouvant être préréglée de la fréquence de résonance principale mémorisée temporairement, ou s'approche des limites prédéfinies par les valeurs de départ (f₁) et finale (f₂) jusqu'à une valeur pouvant préréglée pendant plus longtemps qu'une période pouvant être préréglée.

9. Procédé selon l'une des revendications précédentes, **caractérisé en ce que** la tension d'alimentation du capteur de vitesse de rotation (DRS) est surveillée et l'opération de mise sous tension est redémarrée lorsque la tension d'alimentation du capteur de vitesse de rotation (DRS) chute au-dessous d'une valeur donnée pouvant être préréglée.

10. Procédé selon l'une des revendications précédentes, **caractérisé en ce que** le un signal (v(t), x(t)) proportionnel à la vitesse ou à l'excursion n'est pas amplifié directement, mais utilisé pour générer un signal d'entraînement (F(t)) dont l'amplitude (A_{F}) et la fréquence d'excitation peuvent être régulées.

11. Arrangement de circuit destiné à mettre en oeuvre le procédé selon l'une des revendications 1 à 10, comprenant une régulation opérationnelle (BS) pourvue de moyens (VCO/NCO, PIR1, PIR2, PK, AM, M) servant à générer un signal d'entraînement (F(t)) destiné à entraîner un élément oscillateur pouvant être excité en un mouvement oscillant d'un capteur de vitesse de rotation (DRS) à l'aide d'un signal (v(t), x(t)) proportionnel à la vitesse momentanée ou à l'excursion de l'élément oscillateur,
**caractérisé par**
des moyens destinés à déterminer la fréquence de résonance principale du mouvement oscillant de l'élément oscillateur pendant l'opération de mise sous tension du capteur de vitesse de rotation (DRS), ainsi que des moyens destinés à transférer la fréquence de résonance principale à la régulation opérationnelle (BS) après la fin de l'opération de mise sous tension, les moyens destinés à déterminer la fréquence de résonance principale comprenant des moyens (ST, S₂) destinés à générer une amplitude constante (A_{F}) du signal d'entraînement (F(t)), des moyens (ST, S₁) destinés à élever continuellement la fréquence d'excitation du signal d'entraînement (F(t)) à partir d'une valeur de départ (f₁) inférieure à la fréquence de résonance principale du mouvement oscillant jusqu'à une valeur finale (f₂) supérieure à la fréquence de résonance principale et inférieure à une fréquence de résonance secondaire, des moyens destinés à surveiller en même temps l'excursion (x(t)) et/ou la vitesse (v(t)) de l'élément oscillateur pendant l'élévation de la fréquence d'excitation, ainsi que des moyens destinés à déterminer la fréquence d'excitation à laquelle l'excursion (x(t)) et/ou la vitesse (v(t)) de l'élément oscillateur présentent un maximum.

12. Arrangement de circuit selon la revendication 11, **caractérisé par** des moyens destinés à mémoriser temporairement la fréquence de résonance principale déterminée lors de l'opération de mise sous tension.

13. Arrangement de circuit selon l'une des revendications 11 ou 12, **caractérisé par** des moyens destinés à surveiller l'amplitude (A_{F}) du signal d'entraînement (F(t)), des moyens destinés à comparer l'amplitude (A_{F}) du signal d'entraînement (F(t)) avec une valeur maximale (A_{Fmax}) ainsi que des moyens destinés à relancer l'opération de mise sous tension en cas de dépassement de la valeur maximale (A_{Fmax}) par l'amplitude (A_{F}) du signal d'entraînement (F(t)).

14. Arrangement de circuit selon la revendication 13, **caractérisé par** des moyens destinés à relancer l'opération de mise sous tension en cas de dépassement de la valeur maximale (A_{Fmax}) par l'amplitude (A_{F}) du signal d'entraînement (F(t)) pendant plus d'une période pouvant être préréglée.

15. Arrangement de circuit selon la revendication 11 ou 12, **caractérisé par** des moyens destinés à surveiller la fréquence d'excitation, des moyens destinés à comparer la fréquence d'excitation avec la fréquence de résonance principale mémorisée temporairement ou avec les valeurs de départ (f₁) et finale (f₂), ainsi que des moyens destinés à relancer l'opération de mise sous tension en cas d'écart d'une valeur pouvant être préréglée entre la fréquence d'excitation et une ou plusieurs de ces fréquences.

16. Arrangement de circuit selon la revendication 15, **caractérisé par** des moyens destinés à relancer l'opération de mise sous tension lorsque la fréquence d'excitation du signal d'entraînement (F(t)) s'écarte pendant plus d'une période pouvant être préréglée de la fréquence de résonance principale mémorisée temporairement, ou s'approche des limites prédéfinies par les valeurs de départ (f₁) et finale (f₂) jusqu'à une valeur pouvant préréglée pendant plus longtemps qu'une période pouvant être préréglée.

17. Arrangement de circuit selon l'une des revendications 11 à 16, **caractérisé par** des moyens destinés à surveiller la tension d'alimentation du capteur de vitesse de rotation (DRS) ainsi que des moyens destinés à relancer l'opération de mise sous tension dans le cas d'un écart de la tension d'alimentation d'une valeur pouvant être préréglée.
